# EUROPEAN PATENT SPECIFICATION

(11) **EP 0 748 491 B1**
(45) Date of publication and mention of the grant of the patent: **27.09.2000**
(21) Application number: 95912624.4
(22) Date of filing: 27.02.1995
(51) Int. Cl.: G08B 13/14, G06K 19/07, G06K 7/08

(54) **ELECTRONIC IDENTIFICATION SYSTEM**
ELEKTRONISCHES IDENTIFIZIERUNGSSYSTEM
SYSTEME ELECTRONIQUE D'IDENTIFICATION

(30) Priority: 28.02.1994 GB 9403783
(43) Date of publication of application: 18.12.1996
(73) Proprietor: Avid Identification Systems, Inc., Norco, CA 91760 (US)
(72) Inventor: INMAN, Michael, Bedfordshire LU4 0TN (GB); BEIGEL, Michael, L., Corona, CA 91720 (US)
(74) Representative: Fiener, Josef
(86) International application number: US9502422
(87) International publication number: WO9523393

(56) References cited:
- EP-A- 0 267 085
- EP-A- 0 337 283
- EP-A- 0 491 639
- EP-A- 0 534 559
- DE-C- 3 935 364
- US-A- 4 656 463
- US-A- 4 837 568
- US-A- 4 857 893
- US-A- 5 151 684
- PATENT ABSTRACTS OF JAPAN vol. 10, no. 341 (P-517), 18 November 1986 & JP 61 143890 A (TOSHIBA), 1 July 1986,

## Description

This invention relates to an electronic identification system and a method of identifying apparatus using such a system.

It is known to identify electronic equipment by incorporating in it permanent memory means such as a programmable read only memory (PROM) which stores a unique identification code, serial number or security code readable by a processor or reader that forms part of the equipment. This is done in equipment such as portable telephones, pagers and personal computers to allow verification of the origin or ownership of the equipment, or to authorize use of or access to the equipment, or to control billing of users of the equipment. However, it is possible with such equipment to remove the identification PROM or obliterate the stored identification code so that another PROM can be installed in its place with a new identification code to falsify ownership or facilitate unauthorized use.

It is also known to implant electronic identification tags in animals or objects, the tags comprising permanent memory means for storing an identification code, and inductive coupling means for communicating said identification code to an external identification code reader. The inductive coupling is also the means whereby power is transmitted from the reader to the tag so that the tag is activated and reads the identification code out of the memory means, causing modulation of the power transferred through the inductive coupling. A demodulator in the reader responds to the variations in transferred power and thereby determines the identification code of the tag. These tags are very small so that they can be easily implanted, but they can only be read by an inductively coupled external reader. An example of such a tag is disclosed in US Patent No. 5,214,409. The document EP 534, 559 discloses a chip card wherein connection to another device can be performed by electrical contact pads or contactless via electromagnetic coupling.

An object of the present invention is to provide an improved electronic identification system. The invention is based on an appreciation of the fact that the inductively coupled type of identification tag can beneficially be used in electrical equipment in combination with a processor or reader within the equipment which is adapted to read the identification code in the tag via an electrical connection to the tag which supplies power to the tag for this purpose. The tag can then be read either by the internal reader or by an external reader via the inductive coupling. Because the tag is adapted to be implanted within the equipment, it is more difficult to remove or tamper with, at least without visibly damaging the equipment; and it allows the identification code to be read by the external reader without the equipment being powered up. Additionally, the tag can be readily incorporated in a component or subassembly of the equipment and used to identify the equipment during assembly, even before power means or the internal reader is added, so as to allow improved production line and quality control and monitoring as well as subsequent identification of the manufactured equipment. The invention is defined by the appended claims.

According to one aspect, the invention relates to an electronic identification system comprising an electronic identification tag which stores an identification code, a first reader means which is permanently physically associated with said tag so as to read said identification code via an electrical connection to said tag, and a second reader means which is physically separate from said tag and serves to read said identification code via an electromagnetic inductive coupling to the tag when located in the vicinity of the tag.

According to a second aspect, the invention relates to apparatus incorporating an electronic identification tag and first reader means for reading said tag, said tag comprising memory means for storing an identification code and inductive means for communicating said identification code via an electromagnetic inductive coupling to a second reader means located externally of the apparatus, and said first reader means being connected via an electrical connection to said memory means to read said identification code.

According to a third aspect, the invention relates to a method of identifying apparatus comprising incorporating in the apparatus an electronic identification tag which stores an identification code and which includes inductive means and a first reader means connected via an electrical connection to said tag so as to read said identification code, and providing a second reader means externally of said apparatus to read said identification code via an electromagnetic inductive connection to said inductive means of the tag.

According to a fourth aspect, the invention relates to a method of identifying apparatus which is undergoing a manufacturing process comprising incorporating in the apparatus during said process an electronic identification tag which stores an identification code and which includes inductive means, providing an external reader means externally of said apparatus to read said identification code via an electromagnetic inductive connection to said inductive means during said process, and incorporating an internal reader means in said apparatus and connecting it via an electrical connection to said tag so as to read said identification tag subsequently.

Where the apparatus being identified is electrical apparatus including electrical circuitry for a primary purpose, this same circuitry may advantageously be used to form all or part of the first or internal reader means.

Furthermore, a second memory means may be provided within the apparatus which stores an identification code related to the identification code stored in the tag, and the first or internal reader means reads both identification codes for comparison as an authorization or validation process during operation or checking of the apparatus.

The invention also contemplates an electronic identification tag in which a code is stored to be read, and the code is changed by a pre-set unit each and every time it is read or energized.

### Brief Description Of The Drawings

Figure 1 is a schematic drawing of an electronic identification system according to one embodiment of the invention;
Figure 2 is a schematic drawing of an electronic identification tag as used in the system of Figure 1;
Figure 3 is a schematic drawing showing the system of Figure 1 in more details;
Figure 4 is a schematic drawing showing modifications to the system of Figure 3; and
Figure 5 is a schematic drawing showing another alternative design of a system of the present invention.

### Detailed Description Of The Invention

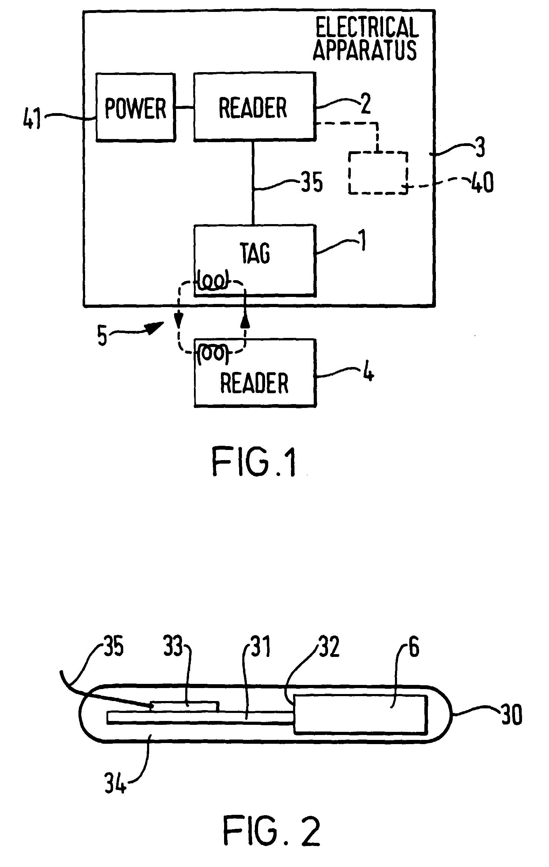

The identification system illustrated in Figures 1 to 3 comprises an electronic identification tag 1 and a tag reader 2 that are incorporated in electrical equipment 3, which may take the form of a personal computer, portable telephone, pager or the like. A power supply 41 within the electrical equipment 3 supplies power to the reader 2. The tag 1 is of the type that permanently stores an identification code that can be read by a reader 4 at a distance by virtue of an electromagnetic inductive coupling 5 between the two devices. This reader 4 is provided externally of the electrical equipment 3 as a separate device that can be used to read the tag 1 when required. The reader 4 transmits power to the tag 1 via the inductive coupling 5 when it reads tag 1. This type of tag and inductively coupled reader is well known, and is shown for example in US Patent No. 5,214,409.

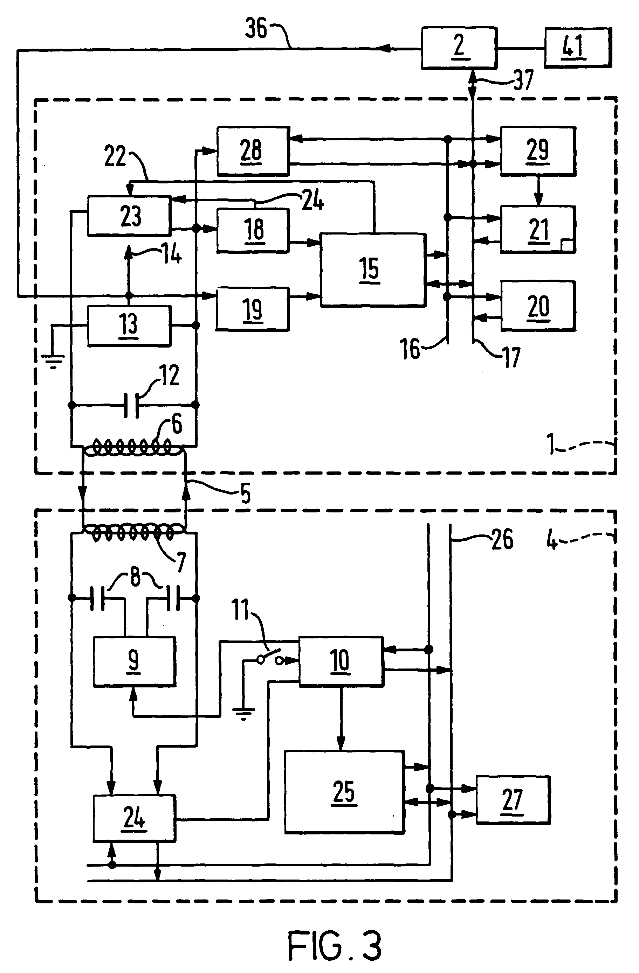

As shown in Figure 3, the inductive coupling 5 comprises a wound wire coil 6 in the tag 1, and a similar coil 7 in the reader 4. The coil 7 is connected in series with a capacitor pair 8 and is energized by a double-ended balanced coil driver 9 with an alternating signal at a frequency determined by a clock generator 10 when a trigger 11 is operated. When the coil 7 is energized, an alternating voltage is generated in the coil 6 of the tag, which is connected in parallel with a capacitor 12 to form a resonant circuit at the frequency of the energizing signal in the reader 4. This alternating voltage in coil 6 is converted to direct current by an AC-to-DC converter and voltage regulator 13, and this DC power supply at 14 is used to power the tag circuitry as follows.

A controller 15 controls operation of the tag circuitry via a control bus 16 and a data bus 17, and is supplied with a clock signal by a clock generator 18 that uses the alternating current frequency in coil 6 as a reference. A threshold detector 19 triggers operation of the controller 15 when the voltage of the DC power supply at 14 reaches a minimum required level for operation of the tag 1.

The identification code comprises a non-changeable portion which is stored in a laser-programmable read-only memory 20 and a changeable portion which is stored in an electrically-erasable programmable read-only memory (EEPROM) 21. When the tag circuitry is energized by the reader 4, the controller 15 reads out the identification code stored in memories 20 and 21 and transmits this as a binary message over a connection 22 to a variable load 23, which is connected across the resonant circuit of the coil 6 and capacitor 12. The variable load 23 applies a load to the resonant circuit of the coil 6 and capacitor 12 that varies in accordance with a modulation scheme, such as a frequency-shift-keying technique, employing one modulation pattern for a "1" bit and another modulation pattern for a "0" bit.

The two different loading patterns each produce a corresponding variation in the voltage across the coil 7 in the reader 4, and this is identified by a demodulator 24 in the reader as a "1" or "0" bit, respectively, and passed to a microprocessor 25 via a data bus 26. The identification code stored in memories 20, 21 is therefore read out and transmitted through the coil 6 via inductive coupling 5 to the coil 7 to the reader 4 bit by bit, where it is read and stored in the microprocessor 25, and subsequently displayed as alpha-numeric data on a display 27.

The tag 1 illustrated in Figure 3 also has the ability to allow that portion of the identification code in the EEPROM 21 to be changed for a new code received via an inductive coupling through the coil 6. A programming unit (not shown) having a transmitting coil coupled to the coil 6, transmits an alternating signal which is modulated in accordance with a modulation scheme, which could be the same as that used in the variable load 23 of the tag when reading the identification code. The existence of this modulation is detected by a demodulator 28 in the tag circuitry, which then proceeds to read the code and pass this on to the controller 15. The controller 15 then operates an EEPROM programmer 29 which programs the EEPROM 21 with the newly received code.

The identification tag 1, as shown in Figure 2, is enclosed in a small capsule 30 which may be made of glass. The coil 6 is wound on a substrate 31 which incorporates the capacitor 12, and potting material 32 fills the space between the two. The rest of the tag circuitry is incorporated in an integrated chip 33 supported on the substrate 31. An inert fluid 34 may fill the capsule 30 around the other components so as to cushion them.

As described so far, the identification tag 1 and inductively coupled reader 4 offer the advantages of a tag that is small and readily implanted in an object to be identified, and which can be read as and when required by the separate reader 4 simply being brought into the proximity of the tag 1. The use of a PROM 20 to store the non-changeable portion of the identification code, and the manner in which this is encapsulated in capsule 30 and implanted in use, serves to make this part of the code secure against tampering. The non-changeable part of the code is set during manufacture and not changed subsequently.

The changeable part of the identification code as stored in EEPROM 21 is supplied where a user requires the ability to enter their own code to further qualify the non-changeable code in the PROM 20. If this is not required, then the EEPROM 21, EEPROM programmer 29 and demodulator 28 can be omitted. Alternatively, in other apparatus, the PROM 20 may be omitted and only the EEPROM 21 used, either alone or in combination with the EEPROM programmer 29 and demodulator 28.

As shown in Figure 1, electrical equipment 3 also incorporates the tag reader 2, and this is connected via electrical connections, represented as 35 in Figures 1 and 2, to the circuitry of the tag 1 so as to read the identification code stored in the PROM 20 and EEPROM 21. The electrical connections 35 are shown in more detail in Figure 3, and comprise a DC input connection 36 by means of which power from the power supply 41 of the reader 2 is supplied to the tag circuitry at 14, as an alternative to the power from the AC-to-DC converter 13. When energized by the internal tag reader 2, the tag circuitry therefore operates in the same manner as described already in connection with the external inductively coupled reader 4, and the controller 15 reads out the identification code from the PROM 20 and EEPROM 21 via the data bus 17. In this configuration, the clock generator 10 is preferably a free running oscillator when powered by DC only, but the clock generator 10 will synchronize with the frequency of an AC signal applied across the terminals of the coil 6.

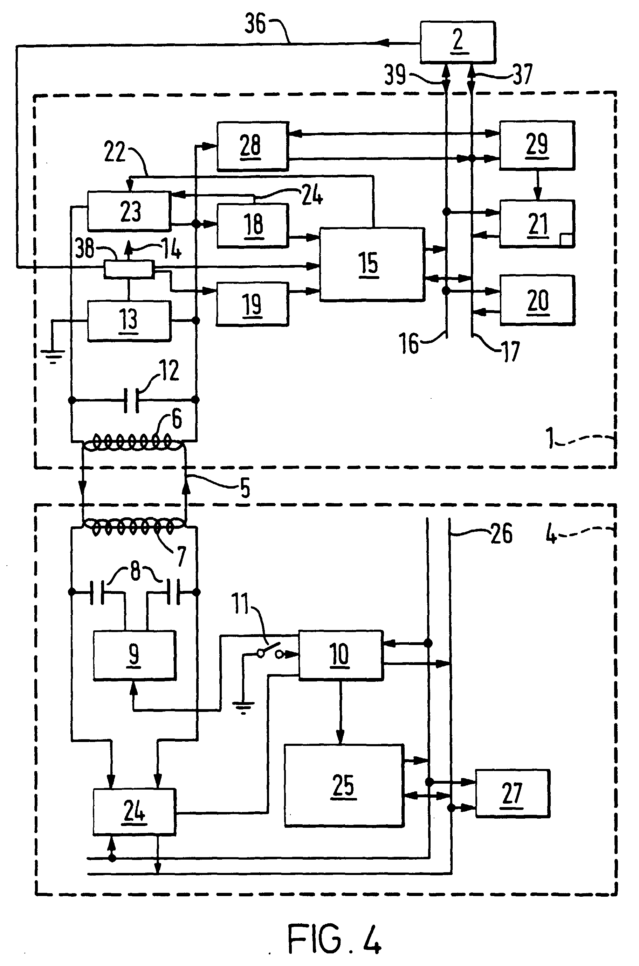

The internal reader 2 has an input connection 37 from the data bus 17, and is thereby able to read the identification code from the PROM 20 and EEPROM 21 in the same way as the controller 15. The controller 15 will simultaneously use the identification code to control the variable load 23 and transmit the identification code via the coil 6, but in an alternative embodiment, this is suppressed by arranging that the controller 15 detects input power in connection 36, and responds when it does so by not sending the identification code to the variable load 23. Suitably modified tag circuitry is shown in Figure 4, in which a power discriminator unit 38 receives both the power input connection 36 and power from the AC-to-DC converter 13, and has the output supply output 14, the output to the threshold detector 19, and a control output to the controller 15.

Figure 4 also shows another alternative feature, whereby the internal reader 2 is further adapted so that it can change the changeable part of the identification code in the EEPROM. This may be achieved by the reader 2 transmitting a suitably modulated signal to the demodulator 28 in the same way as the inductively coupled programming unit sends a modulated signal to the identification tag 1, except that the modulated signal is applied via a direct electrical connection to the demodulator input. However, as shown in Figure 4, the reader 2 is connected via a connection 39 to the control bus 16 of the tag circuitry so that it can send a code signal directly to the EEPROM programmer 29. The new code programmed into the EEPROM 21 may be input from a keyboard or keypad of the electrical equipment 3 (Fig. 1) or from an external unit connected to the electrical equipment 3.

When the electrical equipment 3 is in use, the internal tag reader 2 may read out the identification code, or at least the non-changeable part of the code, from the tag 1 as part of an authorization or validation process. For example, in the case of a portable telephone, this code may be used to identify the telephone and confirm that it is an authorized telephone, and to bill the registered owner of the telephone for its use. In the case of a personal computer, the identification code may be used to check ownership or user status.

In yet another alternative embodiment, the electrical equipment 3 incorporates a second memory to store an identification code which may be the same as or related to the identification code in the tag 1, and the internal reader 2 serves to read both codes and compare them as part of an authorization or validation process. For example, as indicated in the broken outline in Figure 1, a second PROM 40 may be provided that stores the same identification code as the PROM 20 in the tag 1.

It will be appreciated that the internal reader 2 may be either dedicated to the particular function of reading the tag 1, or may have other functions relating to the operation of the electrical equipment 3.

In all of the above embodiments, the option is always available for the tag 1 to be read by the external inductively coupled reader 4 so as to check the identification code of the electrical equipment 3, and this can be done irrespective of whether or not there is a power supply to the tag 1. This feature is especially useful where equipment needs to be identified for stock control, or sales, service or repair monitoring, or warranty checking.

In one particular example, the tag 1 is incorporated in the electrical equipment 3 at an early stage during manufacture of the electrical equipment 3, and is used to identify the electrical equipment 3 on the production line using one or more external readers 4, this information being used to enhance production line and quality control.

In yet another alternative arrangement, the arrangement shown in Figure 4, may be adapted so that the controller 15 is adapted to change the changeable code in the EEPROM 21 by one, each and every time it is read by the internal reader 2. The power discriminator unit 38 distinguishes between the reading operation of the internal reader 2 and that of the external reader 4, and sets the controller 15 so as to change the count in the EEPROM only when read by the internal reader 2. This arrangement may be used to monitor access to the apparatus by a user, assuming that the internal reader 2 operates to read the identification code in the memories 20, 21 every time it is used. The EEPROM 21 then effectively acts as a counter.

Furthermore, access to the equipment 3 may be regulated if the code in the EEPROM 21 read by the internal reader 2 is compared with a threshold value and used to disable the apparatus when the threshold value is reached.

It will be appreciated that in alternative arrangements, the power discriminator unit 38 could be set so that it sets the controller 15 to change the count in the EEPROM 21 by one only when it is read by the external reader 4.

In another arrangement, an identification tag of the inductive type, such as shown in Figures 1 to 3, is adapted so that it can be energized by an external electromagnetic field, and responds by changing a stored code in the tag by one, each and every time it is energized, so that the code records the number of times the tag is energized.

Such a tag may be used simply as a counter, for example, to count the number of times an animal or object carrying the tag, passes a certain point at which an electromagnetic field is set up to couple inductively with the tag. The count recorded by the tag would be read by an inductive reader such as reader 4 in Figure 3. The tag may also incorporate a non-changeable code in the PROM 20 which serves as an identification code that is also read by the reader 4. Alternatively, such a tag may be used to allow authorization on a limited number of occasions, the tag being read by an inductive reader, such as reader 4, which causes the stored code to be changed by one, each and every time it is read to give an authorization, authorization being withheld at a predetermined code value.

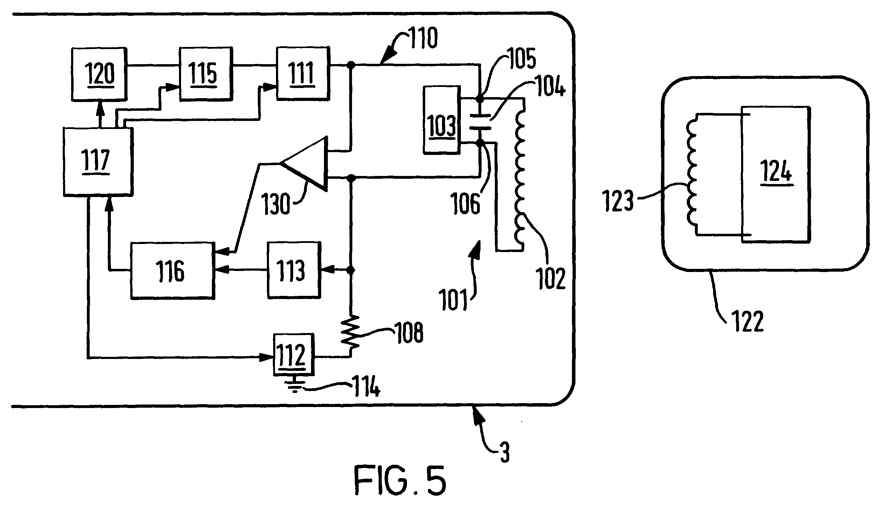

Fig. 5 is a schematic drawing showing another alternative design for a system according to the present invention. In this embodiment, the equipment 3 may include an internal tag 101 which includes a coil 102 interconnected to tag circuitry 103 and a capacitor 104 at terminals 105 and 106. The equipment 3 also includes an internal reader circuit 110 interconnected to the terminals 105 and 106 of the coil 102.

The internal reader circuit 110 includes analog switches 111 and 112. The switch 112 is connected through a resister 108 to a low impedance voltage and/or current sensor 113 and to system ground 114. The switch 111 is connected to a square wave generator 120 via an amplitude controller 115, and is capable of outputting a signal of sufficient magnitude to power an AC-DC converter in the tag circuitry 103, at the clock frequency specified for an external reader 122.

The internal tag 101, which can be activated by the internal reader circuit 110, will output its identification code signal by variably loading the terminals 105 and 106 of the coil 102. The loading of the coil 102 will be sensed by the current sensor 113 and the internal reader circuit 110 can thereby decode the identification signal synchronously.

When the internal reader circuit 110 is not reading the internal tag 101, the analog switches 111 and 112 are open and the internal tag 101 can be read by the external reader 122, which includes a coil 123 and associated circuitry 124. If it is desired to have the internal reader circuit 110 also to be "notified" that the external reader 122 is reading the internal tag 101, and for the internal reader circuit 110 to be able to read the internal tag 101 simultaneously, then a high impedance differential voltage sensor 130 can be connected across the terminals 105 and 106 of the coil 102. The voltage sensor 130 will not interfere with either the external activation or the internal activation of the internal tag 101, but will provide a signal to the internal reader circuit 110 which is congruent to the tag modulation signal. The internal reader circuit 110 can therefore decode the identification code signal of the identification tag 101 simultaneously with the external reader 122.

The current sensor and high impedance voltage sensor 130 output to a demodulator 116 which in turn outputs a signal to a computer and controller circuit 117. The computer and controller circuit 117 controls the square wave generator 120, amplitude controller 115 and switches 111 and 112.

The apparatus of Fig. 5 and the method of its use has advantageous in that it allows operation with the integrated circuits of existing radio frequency identification devices with minimal modifications. Writing data to the memory of the identification tag 101 can also be accomplished using this method, by modulation of the square wave voltage or other parameter as described in U.S. Patent No. 5,214,409.

The foregoing description is exemplary of the preferred embodiments, however, the scope of the invention is to be interpreted by the appended claims.

## Claims

1. An identification tag (1) for an electronic identification system, comprising:
a memory device (20,21) for storing an identification code;
circuitry (6) connected to said memory device to allow reading of the identification code stored in said memory device by electromagnetic inductive coupling (5) with the tag, the identification tag being interconnected with
an electrical circuit (3) including a reader (2) via a permanent electrical connection (35) to allow access to and reading of the identification code stored in said memory device.

2. A tag as claimed in claim 1 including a read controller which controls reading of the identification code stored in said memory device as initiated both via said circuitry and said electrical connection.

3. A tag as claimed in claim 2 in which the read controller causes said identification code to be transmitted by said electromagnetic inductive coupling when reading is initiated via said circuitry, and suppresses such transmission when reading is initiated via said electrical connection.

4. A tag as claimed in any one of the preceding claims further comprising:
a programmer which controls, via at least one of said circuitry and said electrical connection, the selection of at least a portion of said identification code which is changeable.

5. The electronic identification tag of claim 1, further comprising means for changing the code which is stored to be read by a pre-set unit each time the tag is read or energized.

6. An electronic identification system comprising: a tag (1) having
a memory device (20,21) for storing an identification code;
circuitry (6) connected to said memory device to allow reading of the identification code stored in said memory device by electromagnetic inductive coupling (5) with the tag;
an electrical circuit (3) including a first reader (2) interconnected via a permanent electrical connection (35) to said memory device of said identification system to allow access to and reading of the identification code stored in said memory device; and
the first reader being connected via said permanent electrical connection (35) to read said code.

7. A system as claimed in claim 6 including an external reader (4) capable of reading said identification code by electromagnetic inductive coupling (5) to said tag of said identification system.

8. An electronic identification apparatus comprising:
an identification tag (1) having a memory device (20,21) for storing an identification code, circuitry (6) connected to said memory device to allow reading of the identification code stored in said memory device by electromagnetic inductive coupling (5) with the tag, and an electrical circuit (3) including a reader (2) interconnected via a permanent electrical connection (35) to said memory device of said identification tag to allow access to and reading of the identification code stored in said memory device.

9. Apparatus as claimed in claim 8 further comprising:
an electrical apparatus including electrical circuitry for a primary purpose, said electrical apparatus including at least part of said reader.

10. Apparatus as claimed in claim 8 which includes a second memory device to store a second identification code related to said identification code, said reader serving to read both identification codes for comparison in a checking operation.

11. An identification tag for an electronic identification system, comprising:
a memory storage device (20,21) for storing an identification code;
circuitry (6) interconnected to said memory storage device to allow electromagnetic inductively coupled reading of the identification code stored in said memory storage device; and
means for allowing the identification code stored in said memory storage device to be accessed via a permanent electrical connection (35) to said identification tag.

12. An electronic identification system comprising:
an identification tag for storing an identification code;
a first reader permanently electrically interconnected to said identification tag and capable of reading said identification code; and
a second reader capable of reading said identification code of said identification tag via electromagnetic inductive coupling interrogation of said identification tag.

13. An electronic apparatus comprising:
an electronic identification tag (1) including a memory (20,21) for storing an identification code and circuitry (6) for transmitting said identification code via inductive coupling;
a reader (2) permanently electrically interconnected to said identification tag and capable of reading said identification code.

14. A method of identifying apparatus comprising:
incorporating in the apparatus an electronic identification tag which stores an identification code accessible via an inductive coupling circuit;
providing a first reader connected via a permanent electrical connection to said identification tag so as to read said identification code; and
providing a second reader externally of said apparatus to access said identification code by an electromagnetic inductive connection via said inductive coupling circuit of said identification tag.

## Patentansprüche

1. Identifizierungsetikett (1) für ein elektronisches Identifizierungssystem, umfassend:
- eine Speichervorrichtung (20, 21) zum Speichern eines Identifizierungscodes;
- eine Schaltung (6), die an die Speichervorrichtung angeschlossen ist, um das Ablesen des in der Speichervorrichtung gespeicherten Identifizierungscodes durch elektromagnetische induktive Kopplung (5) mit dem Etikett zu ermöglichen,
wobei das Identifizierungsetikett über eine permanente elektrische Verbindung (35) mit einem einen Leser (2) enthaltenden Schaltkreis (3) verbunden ist, um einen Zugriff auf den in der Speichervorrichtung gespeicherten Identifizierungscode und dessen Ablesen zu ermöglichen.

2. Etikett nach Anspruch 1, mit einer Lesesteuereinheit, die das Ablesen des in der Speichervorrichtung gespeicherten Identifizierungscodes auf Auslösung sowohl über die Schaltung als auch über die elektrische Verbindung steuert.

3. Etikett nach Anspruch 2, wobei die Lesesteuereinheit veranlaßt, daß der Identifizierungscode von der elektromagnetischen induktiven Kopplung übertragen wird, wenn der Lesevorgang über die Schaltung ausgelöst wird, und eine solche Übertragung unterdrückt, wenn der Lesevorgang über die elektrische Verbindung ausgelöst wird.

4. Etikett nach einem der vorhergehenden Ansprüche, ferner umfassend einen Programmierer, der über zumindest eine der Schaltung und der elektrischen Verbindung die Auswahl zumindest eines Abschnitts des Identifizierungscodes steuert, der veränderbar ist.

5. Elektronisches Identifizierungsetikett nach Anspruch 1, ferner umfassend eine Einrichtung, um den Code, der zum Ablesen gespeichert ist, durch eine voreingestellte Einheit jedesmal zu ändern, wenn das Etikett gelesen oder aktiviert wird.

6. Elektronisches Identifizierungssystem, umfassend:
- ein Etikett (1) mit einer Speichervorrichtung (20, 21) zum Speichern eines Identifizierungscodes;
- eine Schaltung (6), die an die Speichervorrichtung angeschlossen ist, um das Ablesen des in der Speichervorrichtung gespeicherten Identifizierungscodes durch eine elektromagnetische induktive Kopplung (5) mit dem Etikett zu ermöglichen;
- einen Schaltkreis (3) mit einem ersten Leser (2), der über eine permanente elektrische Verbindung (35) mit der Speichervorrichtung des Identifizierungssystems verbunden ist, um einen Zugriff auf den in der Speichervorrichtung gespeicherten Identifizierungscode und dessen Ablesen zu ermöglichen; und
wobei der erste Leser zum Ablesen des Codes über die permanente elektrische Verbindung (35) angeschlossen ist.

7. System nach Anspruch 6, mit einem externen Leser (4), der in der Lage ist, den Identifizierungscode durch elektromagnetische induktive Kopplung (5) an das Etikett des Identifizierungssystems zu lesen.

8. Elektronische Identifizierungsvorrichtung umfassend ein Identifizierungsetikett (1) mit einer Speichervorrichtung (20, 21) zum Speichern eines Identifizierungscodes, einer an die Speichervorrichtung angeschlossenen Schaltung (6), um das Ablesen des in der Speichervorrichtung gespeicherten Identifizierungscodes durch elektromagnetische induktive Kopplung (5) mit dem Etikett zu ermöglichen, und einen Schaltkreis (3), der einen über eine permanente elektrische Verbindung (35) mit der Speichervorrichtung des Identifizierungsetiketts verbundenen Leser (2) einschließt, um einen Zugriff auf den in der Speichervorrichtung gespeicherten Identifizierungscode und dessen Ablesen zu ermöglichen.

9. Vorrichtung nach Anspruch 8, ferner umfassend eine elektrische Vorrichtung mit einer elektrischen Schaltung für einen primären Zweck, wobei die elektrische Vorrichtung zumindest einen Teil des Lesers einschließt.

10. Vorrichtung nach Anspruch 8, mit einer zweiten Speichervorrichtung zum Speichern eines zweiten, auf den Identifizierungscode bezogenen Identifizierungscodes, wobei der Leser zum Ablesen beider Identifizierungscodes zum Vergleich in einem Prüfvorgang dient.

11. Identifizierungsetikett für ein elektronisches Identifizierungssystem, umfassend:
- eine Speichervorrichtung (20, 21) zum Speichern eines Identifizierungscodes;
- eine Schaltung (6), die mit der Gedächtnisspeichervorrichtung verbunden ist, um ein elektromagnetisches, induktiv gekoppeltes Ablesen des in der Gedächtnisspeichervorrichtung gespeicherten Identifizierungscodes zu ermöglichen; und
- eine Einrichtung zur Ermöglichung des Zugriffs auf den in der Gedächtnisspeichervorrichtung gespeicherten Identifizierungscode über eine permanente elektrische Verbindung (35) zu dem Identifizierungsetikett.

12. Elektronisches Identifizierungssystem, umfassend:
- ein Identifizierungsetikett zum Speichern eines Identifizierungscodes;
- einen ersten Leser, der mit dem Identifizierungsetikett permanent elektrisch verbunden und in der Lage ist, den Identifizierungscode zu lesen; und
- einen zweiten Leser, der in der Lage ist, den Identifizierungscode des Identifizierungsetiketts über elektromagnetische induktive Kopplungsabfrage des Identifizierungsetiketts zu lesen.

13. Elektronische Vorrichtung, umfassend:
- ein elektronisches Identifizierungsetikett (1) mit einem Speicher (20, 21) zum Speichern eines Identifizierungscodes und einer Schaltung (6) zum Übertragen des Identifizierungscodes über eine induktive Kopplung; und
- einen Leser (2), der mit dem Identifizierungsetikett permanent elektrisch verbunden und in der Lage ist, den Identifizierungscode zu lesen.

14. Verfahren zur Identifizierung von Vorrichtungen, umfassend:
- Aufnehmen eines elektronischen Identifizierungsetiketts, das einen über eine induktive Koppelschaltung zugänglichen Identifizierungscode speichert, in die Vorrichtung;
- Vorsehen eines ersten Lesers, der über eine permanente elektrische Verbindung mit dem Identifizierungsetikett verbunden ist, um den Identifizierungscode zu lesen; und
- Vorsehen eines zweiten Lesers außerhalb der Vorrichtung, um durch eine elektromagnetische induktive Verbindung über die induktive Koppelschaltung des Identifizierungsetiketts auf den Identifizierungscode zuzugreifen.

## Revendications

1. Etiquette d'identification (1) pour système d'identification électronique, comprenant :
un dispositif de mémorisation (20, 21) servant à emmagasiner un code d'identification ;
un circuit (6) connecté audit dispositif de mémorisation pour permettre la lecture du code d'identification emmagasiné dans ledit dispositif de mémorisation par couplage inductif électromagnétique (5) avec l'étiquette, l'étiquette d'identification étant interconnectée avec un circuit électrique (3) comportant un lecteur (2) via une connexion électrique permanente (35) pour permettre l'accès au code d'identification emmagasiné dans ledit dispositif de mémorisation et sa lecture.

2. Etiquette selon la revendication 1, comportant un dispositif de commande de lecture qui commande la lecture du code d'identification emmagasiné dans ledit dispositif de mémorisation lorsque cela est commencé à la fois via ledit circuit et ladite connexion électrique.

3. Etiquette selon la revendication 2, où le dispositif de commande de lecture fait que ledit code d'identification est transmis par ledit couplage inductif électromagnétique lorsque la lecture commence par l'intermédiaire dudit circuit et arrête cette transmission lorsque la lecture commence par l'intermédiaire de ladite connexion électrique.

4. Etiquette selon l'une quelconque des revendications précédentes, comprenant en outre :
un moyen de programmation qui commande, par l'intermédiaire d'au moins un des éléments que constituent ledit circuit et ladite connexion électrique, la sélection d'au moins une partie dudit code d'identification qui est modifiable.

5. Etiquette d'identification électronique selon la revendication 1, comprenant en outre un moyen permettant de modifier le code qui est stocké pour être lu par une unité prépositionnée à chaque fois que l'étiquette est lue ou excitée.

6. Système d'identification électronique comprenant une étiquette (1) qui possède :
un dispositif de mémorisation (20, 21) servant à emmagasiner un code d'identification ;
un circuit (6) connecté audit dispositif de mémorisation pour permettre la lecture du code d'identification emmagasiné dans ledit dispositif de mémorisation par couplage inductif électromagnétique (5) avec l'étiquette ;
un circuit électrique (3) comportant un premier lecteur (2) interconnecté via une connexion électrique permanente (35) audit dispositif de mémorisation dudit système d'identification pour permettre l'accès du code d'identification emmagasiné dans ledit dispositif de mémorisation et sa lecture ; et
le premier lecteur étant connecté via ladite connexion électrique permanente (35) pour lire ledit code.

7. Système selon la revendication 6, comportant un lecteur externe (4) pouvant lire ledit code d'identification par couplage inductif électromagnétique (5) à ladite étiquette dudit système d'identification.

8. Appareil d'identification électronique comprenant :
une étiquette d'identification (1) possédant un dispositif de mémorisation (20, 21) qui sert à emmagasiner un code d'identification, un circuit (6) connecté audit dispositif de mémorisation pour permettre la lecture du code d'identification emmagasiné dans ledit dispositif de mémorisation par couplage inductif électromagnétique (5) avec l'étiquette, et un circuit électrique (3) comportant un lecteur (2) interconnecté via une connexion électrique permanente (35) audit dispositif de mémorisation de ladite étiquette d'identification pour permettre l'accès au code d'identification stocké dans ledit dispositif de mémorisation et sa lecture.

9. Appareil selon la revendication 8, comprenant en outre :
un appareil électrique comportant un circuit électrique destiné à un but principal, ledit appareil électrique comportant au moins une partie dudit lecteur.

10. Appareil selon la revendication 8, qui comporte un deuxième dispositif de mémorisation servant à stocker un deuxième code d'identification relié audit code d'identification, ledit lecteur servant à lire les deux codes d'identification en vue de les comparer dans une opération de contrôle.

11. Etiquette d'identification pour système d'identification électronique, comprenant :
un dispositif d'emmagasinage et de mémorisation (20, 21), servant à emmagasiner un code d'identification ;
un circuit (6) interconnecté audit dispositif d'emmagasinage et de mémorisation pour permettre une lecture par couplage inductif électromagnétique du code d'identification emmagasiné dans ledit dispositif d'emmagasinage et de mémorisation ; et
un moyen servant à permettre qu'il soit fait accès au code d'identification emmagasiné dans ledit dispositif d'emmagasinage et de mémorisation via une connexion électrique permanente (35) à ladite étiquette d'identification.

12. Système d'identification électronique comprenant :
une étiquette d'identification servant à emmagasiner un code d'identification ;
un premier lecteur interconnecté électriquement de façon permanente à ladite étiquette d'identification et pouvant lire ledit code d'identification ; et
un deuxième lecteur pouvant lire ledit code d'identification de ladite étiquette d'identification via une interrogation par couplage inductif électromagnétique de ladite étiquette d'identification.

13. Appareil électronique comprenant :
une étiquette d'identification électronique (1) comportant une mémoire (20, 21) servant à emmagasiner un code d'identification et un circuit (6) servant à transmettre ledit code d'identification par couplage inductif ; et
un lecteur interconnecté électriquement de façon permanente à ladite étiquette d'identification et pouvant lire ledit code d'identification.

14. Procédé destiné à un appareil d'identification, qui comprend les opérations suivantes :
incorporer dans l'appareil une étiquette d'identification électronique qui emmagasine un code d'identification accessible via un circuit de couplage inductif ;
prévoir un premier lecteur connecté via une connexion électrique permanente à ladite étiquette d'identification pour lire ledit code d'identification ; et
prévoir un deuxième lecteur extérieur audit appareil pour faire accès audit code d'identification par une connexion inductive électromagnétique via ledit circuit de couplage inductif de ladite étiquette d'identification.
